# EUROPÄISCHE PATENTSCHRIFT

(11) **EP 2 114 753 B1**
(45) Veröffentlichungstag und Bekanntmachung des Hinweises auf die Patenterteilung: **14.12.2011**
(21) Anmeldenummer: 07856157.8
(22) Anmeldetag: 27.12.2007
(51) Int. Cl.: B62D 21/02, B62D 21/11

(54) **ACHSTRÄGER FÜR KFZ**
AXLE BRACKET FOR MOTOR VEHICLES
SUPPORT D'ESSIEU POUR VÉHICULES AUTOMOBILES

(30) Priorität: 29.12.2006 DE 102006062524; 02.01.2007 DE 102007001015
(43) Veröffentlichungstag der Anmeldung: 11.11.2009
(73) Patentinhaber: KSM Castings GmbH, 31137 Hildesheim (DE)
(72) Erfinder: BUSCHJOHANN, Thomas, 31171 Nordstemmen (DE); KAUERT, Heiko, 15827 Blankenfelde (DE)
(74) Vertreter: Patentanwälte Thömen & Körner
(86) Internationale Anmeldenummer: PCT/DE2007/002315
(87) Internationale Veröffentlichungsnummer: WO 2008/080387

(56) Entgegenhaltungen:
- WO-A-2004/028882
- WO-A-2007/031059
- DE-A1- 4 322 717
- US-A- 5 280 957

## Beschreibung

Die Erfindung bezieht sich auf einen Achsträger bzw. auf einen Hilfsrahmen, auch Fahrschemel genannt, für die Hinterachse von Fahrzeugen, die für Kraftfahrzeuge mit nicht angetriebener Hinterachse, als auch entsprechend angepasst bzw. ausgebildet, für Fahrzeuge mit angetriebener Hinterachse eingesetzt werden können.

Derartige Hilfsrahmen, auch Fahrschemel, Tragrahmen bzw. Hinterachsträger genannt, sind beispielsweise durch die DE 101 33 424 A1 bekannt geworden zur Bildung einer so genannten Fünflenkerachse mit zumindest zwei oberhalb des Radmittelpunktes und zwei unterhalb des Radmittelpunktes angelenkten Querlenkern und der Spurstange als fünften Lenker. Dabei besteht der Achsträger selbst aus zwei hohlen Längs- und zwei hohlen Querprofilträgern, die miteinander verschweißt sind und Anbindungsstellen für die oben genannten Aggregate aufweisen. Sowohl die Herstellung der Profilträger für sich ist aufwändig und teuer, ebenso die Verschweißung miteinander und auch die Anbringung und Ausgestaltung der Anbindungsstellen für die verschiedenen Aggregate.

Der vorliegenden Erfindung lag die Aufgabe zugrunde, diese Nachteile zu vermeiden und derartige Achsträger preiswerter und einfacher herzustellen, sowohl hinsichtlich der Anzahl der Einzelteile, als aus denen er zusammengesetzt ist als auch hinsichtlich dieser Einzelteile selbst sowie hinsichtlich der Ausgestaltung der Anbindungsstellen. Außerdem lag die Aufgabe zugrunde, Gewicht einzusparen und die Steifigkeit zu erhöhen.

Der Achsträger gemäß der vorliegenden Erfindung zeichnet sich demnach dadurch aus, dass er als zusammengesetzte Baueinheit ausgebildet ist mit einem einzigen profilierten Querträger mit an dessen Endbereichen befestigten und aus Leichtmetall hergestellten Konsolen, die jeweils einstückig mit eine Hülse für den Querträger ausgebildet wird und mit je einstückig angeformten Anbindungsstellen für mindestens drei der nachfolgend angeführten Aggregate versehen sind:
- die oberen Querlenker
- die unteren Querlenker
- die Spurstange
- die Feder- bzw. Dämpfungseinheit
und die mindestens je zwei einstückig angeformte Anbindungsstellen zur Anbindung des Achsträgers an der Karosserie aufweisen.

Dabei sind - in Fahrtrichtung gesehen - eine der Anbindungsstellen zur Anbindung an die Karosserie vor und eine hinter dem Querträger vorgesehen.

Jede der Konsolen besitzt dabei eine angeformte Aufnahmehülse für den Querträger, der als Hohlprofil ausgebildet ist. Das Profil kann in vorteilhafter Weise ein Vierkantprofil sein und die Aufnahmehülse für den Querträger ist der Außenkontur desselben angepasst, so dass der Querträger in diese Aufnahmehülse eingesteckt und mit der Konsole verschweißt werden kann. Die Aufnahmehülsen und der Querträger können aber auch stumpf aneinander geschweißt sein.

Die Konsole kann dabei in besonders vorteilhafter Weise aus Leichtmetall hergestellt sein, insbesondere aus einer Al- Legierung und als Druckgussteil hergestellt sein. Eine solche Konsole kann besonders einfach und preiswert und auch verwindungssteif hergestellt werden, wobei die alten Anbindungsstellen und die Hülse für den Querträger einstückig mit der Konsole ausgebildet werden wird.

Die Aufnahmehülse für den Querträger kann der Außenkontur desselben angepasst sein und zwar derart, dass sie den Querträger umgreifen können, so dass der Querträger eingeführt und verschweißt werden kann. Der Querträger kann aber auch stumpf an den entsprechend ausgebildeten Aufnahmebereich angeschweißt sein.

Die Anbindungsstellen - die in Fahrtrichtung vordere und die in Fahrtrichtung hinten gelegene - zur Anbindung des zusammengesetzten Achsträgers an die Karosserie können hülsenartig (rund) ausgebildet sein mit einer zumindest annähernd senkrecht zur Fahrbahn liegenden Achse, wobei die Aufnahme des Achsträgers über die hülsenartigen Bauteile über Gummilager erfolgen kann.

Die Steifigkeit des Achsträgers kann erheblich erhöht werden, wenn über der Aufnahmehülse für den Querträger auf der der Fahrbahnseite derselben abgewandten Seite ein mit Verstärkungsrippen versehener Aufsatz angeformt ist, der die Anbindungsstelle für die Federung und/ oder die Dämpfung bildet.

Für den oberen und den unteren Querträger sind an der Konsole je zwei Anbindungsstellen vorgesehen - eine erste und eine zweite, von denen die eine in Fahrtrichtung gesehen vor und eine hinter dem Querträger vorgesehen ist. Dabei sind die Anbindungsstellen jeweils durch zwei Befestigungsstellen gebildet, die - in Fahrtrichtung gesehen - hintereinander liegen, nämlich
- für die eine, vordere Anbindungsstelle und die andere, hintere Anbindungsstelle für den oberen Querlenker,
- für die eine, vordere Anbindungsstelle und die andere, hintere Anbindungsstelle für den unteren Querlenker,
- für die Anbindungsstelle für die Spurstange,
- für die Anbindungsstelle für die Feder- bzw. Dämpfereinheit. Besonders vorteilhaft ist es dabei, wenn von den beiden Anbindungsstellen für den oberen Querlenker je eine Befestigungsstelle beidseits des Aufsatzes oder zumindest teilweise innerhalb der Konturen des Aufsatzes vorgesehen und je eine Befestigungsstelle jeweils einer den Anbindungsstellen der Konsole an die Karosserie benachbart sind. Für den unteren Querlenker können je eine Befestigungsstelle den unteren Eckbereichen der Aufnahmehülse für den Querlenker benachbart angeordnet und die zwei weiteren für den unteren Querlenker von den unteren Eckbereichen der Aufnahmehülse für den Querträger beabstandet sein.

Zur weiteren Erhöhung der Versteifung kann es vorteilhaft sein, wenn wenigstens eine der Karosserieanbindungsstellen, also die zum Beispiel als Hülse ausgebildete Befestigungsstelle, über eine Verstärkungsrippe mit dem kastenförmigen Ansatz verbunden ist. Zweckmäßigerweise sind beide Karosserieanbindungshülsen mit dem kastenförmigen Aufsatz jeweils mit einer solchen, vorzugsweise flächig ausgebildeten Verstärkungsrippe miteinander verbunden. Zweckmäßig ist es dabei, wenn die Verstärkungsrippe zumindest annähernd vom oberen Bereich des kastenförmigen Aufsatzes zum oberen Bereich der Anbindungshülse verläuft.

Eine optimale Ausgestaltung hinsichtlich der Festigkeit und auch der Steifigkeit ergibt sich weiterhin, wenn zumindest einzelne der Befestigungsstellen durch zumindest annähernd quer zur Fahrtrichtung verlaufende Hülsen oder Hülsen-Stummel gebildet sind, durch die zum Beispiel Schrauben zur Befestigung der entsprechenden Aggregate hindurchgeführt werden können, wobei auf einer Seite der hülsenartig ausgebildeten Befestigungsstelle die Aggregate aufliegen und auf der anderen Seite der Kopf einer Schraube oder eine Mutter anliegt.

Besonders vorteilhaft ist es weiterhin, wenn von den Konturen, wie End- oder Eckkonturen des hülsenartigen Aufnahmebereiches für den Querträger aus Versteifungsrippen zu den einzelnen Befestigungsstellen verlaufen und wenn weiterhin von den unteren Bereichen der Karosserie-Anbindungshülsen Verstärkungsrippen ausgehen, um die Konsole herum und zweckmäßigerweise in die hülsenartig ausgebildeten Befestigungsbereiche einlaufen oder diese zumindest tangieren und insbesondere diejenigen für den unteren Querträger miteinander verbinden.

Für bestimmte Einsatzfälle kann es vorteilhaft sein, wenn von den oberen Eckbereichen der Aufnahmehülse für den Querträger aus jeweils eine flächige Verstärkungsrippe in Richtung der Hülse zur Karosserieanbindung, bis zu einem hülsenartig ausgebildeten Knoten verläuft, dessen Achse zumindest annähernd quer zur Fahrtrichtung liegt.

Für gewisse Anwendungsfälle kann es vorteilhaft sein, wenn vom hülsenartigen Knoten aus eine flächige Verstärkungsrippe zum unteren Bereich der Aufnahmehülse für den Querträger verläuft.

Für einzelne Gebrauchsfälle kann es zweckmäßig sein, wenn vom Knoten aus eine weitere flächige Verstärkungsrippe zu denjenigen Befestigungsstellen verläuft, die von den unteren Eckbereichen der Aufnahmehülse für den Querträger beabstandet sind.

Für gewisse Einsatzfälle kann es von Vorteil sein, wenn eine weitere Verstärkungsrippe von den den unteren Eckbereichen der Aufnahmehülse für den Querträger benachbarten Befestigungsstellen zu den den unteren Eckbereichen der Hülse entfernten Befestigungsstellen für den unteren Querträger verläuft.

Für verschiedene Anwendungsfälle kann es vorteilhaft sein, wenn eine weitere Verstärkungsrippe vom unteren Bereich der Hülse zur Karasserieanbindung, an dem Knoten vorbei, zu den den unteren Eckbereichen der Hülse für den Querträger entfernten Befestigungsstellen für den unteren Querlenker verläuft.

Für bestimmte Anwendungsfälle kann es zweckmäßig sein, wenn eine weitere Verstärkungsrippe von den oberen Eckbereichen der Aufnahmehülse für den Querträger zu der dem Aufsatz beabstandeten Befestigungsstelle für den oberen Querlenker verläuft.

Für gewisse Gebrauchsfälle kann es von Vorteil sein, wenn der hülsenartig ausgebildete Knoten als die eine, der Aufnahmehülse für den Querträger zugewandte Befestigungsstelle für die Spurstange dient.

Für weitere Anwendungsfälle kann es zweckmäßig sein, wenn die andere Befestigungsstelle für die Spurstange auf der der Aufnahmehülse für den Querträger abgewandten Seite derjenigen Verstärkungsrippe als Ausleger angeformt ist, die vom unteren Bereich der Hülse zur Karosserieanbindung, an dem Knoten vorbei, zu den den unteren Eckbereichen der Hülse für den Querträger entfernten Befestigungsstellen für den unteren Querlenker verläuft.

Weitere vorteilhafte erfindungsgemäße Ausgestaltungen ergeben sich aus den Zeichnungen im Zusammenhang mit deren Beschreibung.

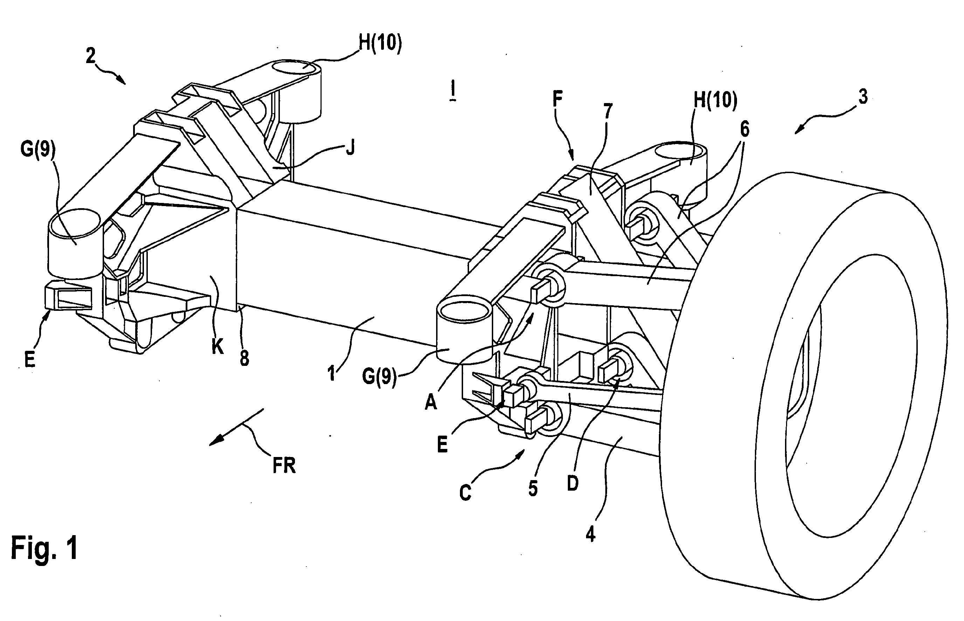

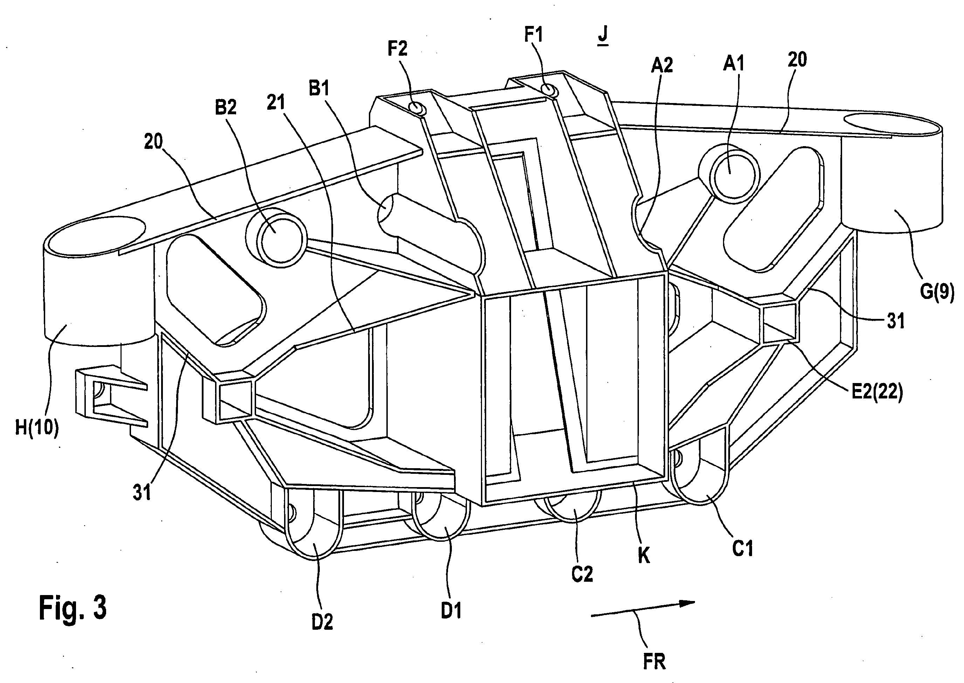

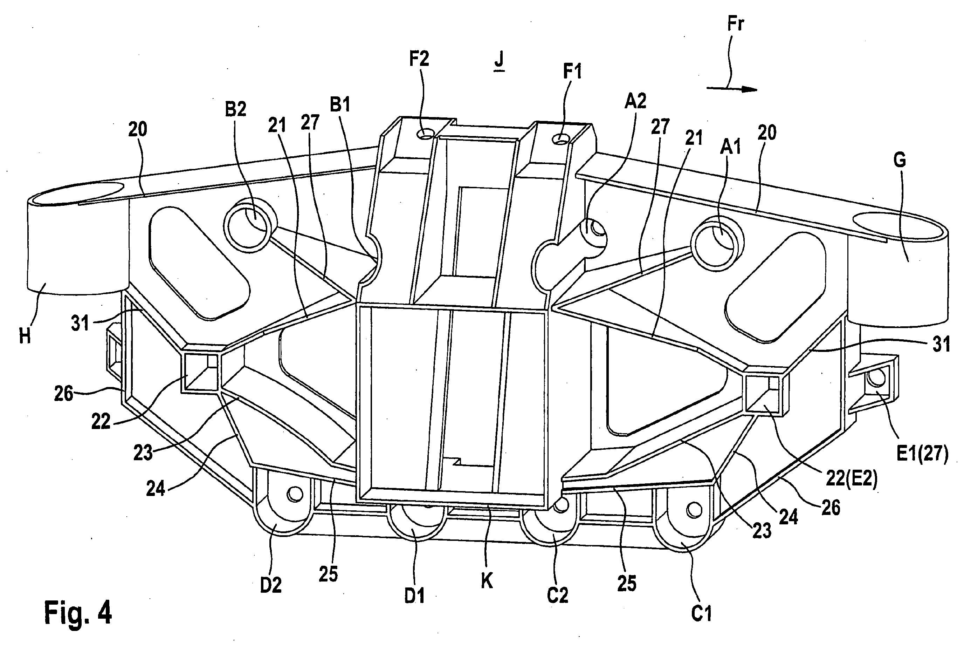

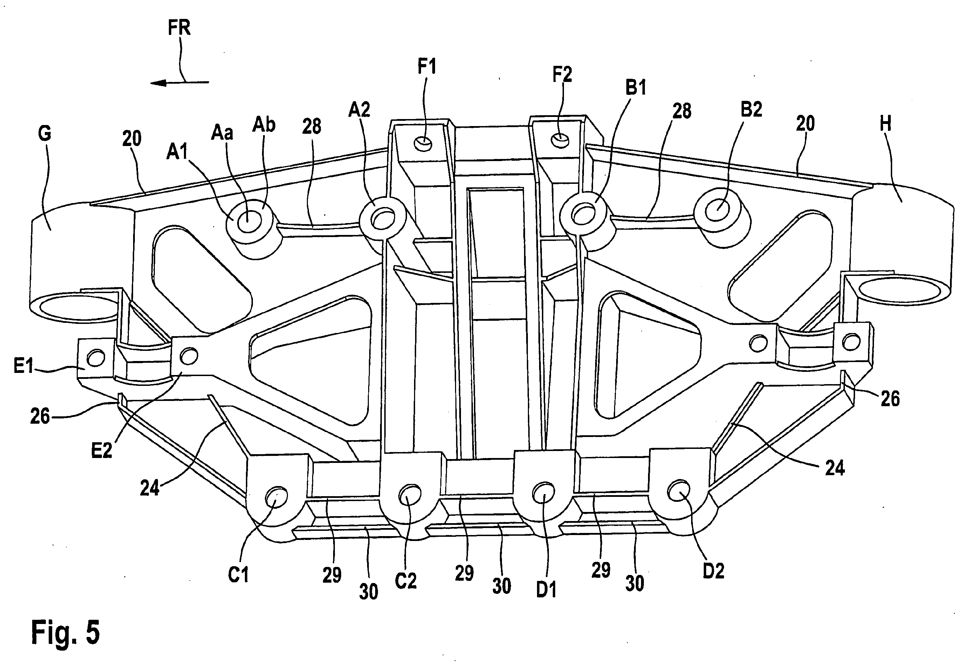

Anhand der Figuren 1 bis 5 sei die Erfindung näher erläutert:
Dabei zeigt Figur 1 den Achsträger I für eine nicht angetriebene Hinterachse. Der Achsträger besteht aus einem profilierten Querträger 1 und den an seinen Endbereichen befestigten Konsolen 2 und 3, wobei die Konsole 2 die rechte Konsole ist und die Konsole 3 die linke. Die Fahrtrichtung ist durch den Pfeil FR gekennzeichnet. Die linke Konsole 3 ist mit schematisch dargestellten Aggregaten bestückt, wobei der untere Querlenker mit 4 bezeichnet ist, die Spurstange mit 5, der obere Querlenker mit 6 und die Feder-Dämpfereinheit mit 7.

Figur 2 zeigt den Achsträger I in einer Ansicht bei einer Fahrtrichtung entsprechend dem dort eingezeichneten Pfeil FR.

Die Figuren 3 bis 5 zeigen jeweils die linke Konsole 3 aus verschiedenen Blickrichtungen bei jeweils durch die Pfeile FR gekennzeichneter Fahrtrichtung.

Die Konsolen 2,3 besitzen jeweils angeformte Anbindungsstellen A,B für den oberen Querlenker 6, C,D für den unteren Querlenker 4, E für die Spurstange 5, F für die Feder bzw. Dämpfungseinheit 7 sowie - in Fahrtrichtung FR gesehen - vor und hinter dem Querträger 1 vorgesehene Anbindungsstellen G und H zur Anbindung des Achsträgers I an die Karosserie.

Weiterhin besitzt jede Konsole eine als Vierkant- Hohlprofil ausgebildete Aufnahmehülse K für den Querträger 1. Die Aufnahmehülse K für den Querträger 1 ist der Außenkontur des Querträgers angepasst und mit diesem über eine Schweißnaht 8 verbunden.

Der Querträger der vorliegenden Erfindung ist aus Leichtmetall, insbesondere einer Al- Legierung hergestellt, ebenso wie die Konsolen, die sich in besonders vorteilhafter Weise durch ein Druckgussverfahren herstellen lassen.

Die Anbindungsstellen G und H zur Anbindung des Achsträgers an die Karosserie sind als Hülsen 9,10 ausgebildet mit einer zumindest annähernd senkrecht zur Fahrbahn liegenden Achse und in diesen Hülsen 9,10 können in besonders vorteilhafter Weise Gummilager aufgenommen sein, mit denen eine besonders rationelle und einfache Anbindung des Achsträgers an die Karosserie erfolgen kann.

Auf der der Fahrbahnseite abgekehrten Seite der Aufnahmehülse K ist ein aus Verstärkungsrippen 11-14 und Verstärkungsflächen 15 gebildeter Aufsatz J angeformt zur Bildung der Anbindung F für den Feder-Dämpfer 7.

Für jede der Anbindungsstellen A und B für den oberen Querlenker 6 und C und D für den unteren Querlenker 4 sind jeweils zwei Befestigungsstellen - in Fahrtrichtung gesehen je eine vordere und eine hintere - vorgesehen, und zwar Befestigungsstellen A1 und A2 sowie B1 und B2 für den oberen Querlenker und Befestigungsstellen C1 und C2 sowie D1 und D2 für den unteren Querlenker. Desgleichen ist für die Spurstangen- Anbindungsstelle E je eine vordere und eine hintere Befestigungsstelle E1,E2 vorgesehen, ebenso für die Anbindungsstelle F für den Feder-Dämpfer eine vordere Befestigungsstelle F1 und eine hintere F2.

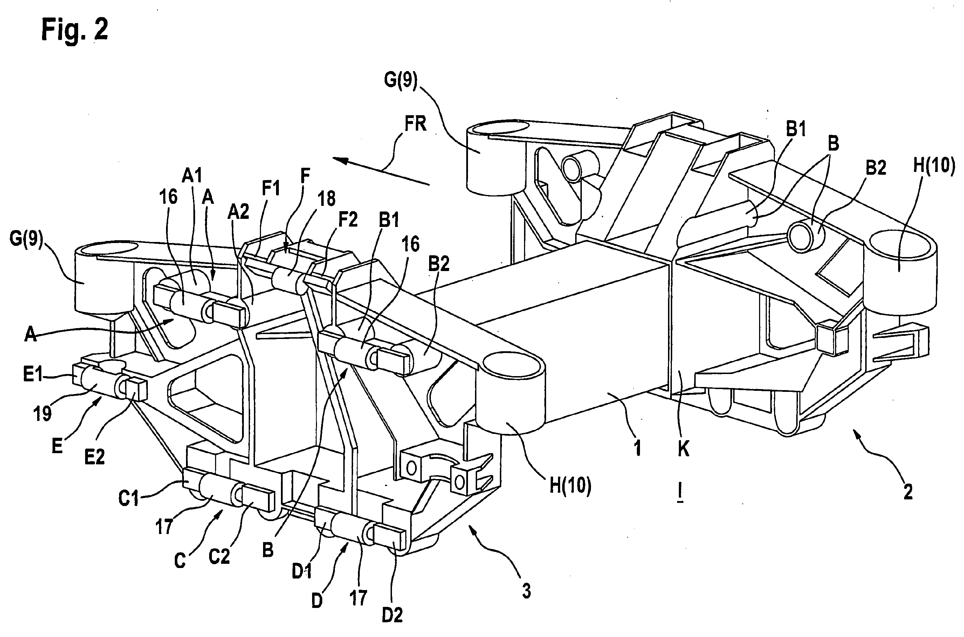

Wie dies im Zusammenhang mit Figur 2 ersichtlich ist, sind für die Anbindung der oben genannten Aggregate sog. Pratzengelenke 16 bis 16 vorgesehen.

Wie insbesondere im Zusammenhang mit den Figuren 2 bis 5 ersichtlich ist, sind von den Anbindungsstellen A,B für den oberen Querlenker 6 die beiden Befestigungsstellen A2 und B1 dem Aufsatz J benachbart bzw. sind sogar zum Teil in dem Aufsatz J enthalten. Die anderen Anbindungsstellen A1 und B2 sind auf der dem Ansatz J abgekehrten Seite vorgesehen und den Karosseriebefestigungsanbindungsstellen G und H bzw. den Hülsen 9,10 zu gewandt.

Von den Anbindungsstellen C,D für den unteren Querlenker 4 sind die zwei Befestigungsstellen C2 und D1 den unteren Eckbereichen der Aufnahmehülse K für den Querträger 1 zugeordnet.

Von den Anbindungsstellen C und D für den unteren Querlenker 4 sind die weiteren beiden Befestigungsstellen C1 und D2 von den Eckbereichen der Aufnahmehülse K entfernt.

Die Anbindungsstellen G,H sind mit dem kastenförmigen Ansatz J über je eine flächige Verstärkungsrippe 20 verbunden, die vom oberen Bereich des kastenförmigen Aufsatzes J zum oberen Bereich der Hülsen 9 zur 10 verlaufen.

Die Befestigungsstellen A1,A2,B1,B2,C1,C2 sowie D1 und D2 sind durch quer zur Fahrtrichtung verlaufende Hülsen- Stummel bzw. Hülsenansätze gebildet, die auf der den Aggregaten 4 und 6 zugewandten Seite von Durchgangsöffnungen durchbrochene Abdeckböden bzw. Auflageflächen abgeschlossen sind. Stellvertretend für die anderen ist lediglich die Durchgangsbohrung Aa und der Boden Ab bezeichnet.

Von den oberen Eckbereichen der Aufnahmehülse J für den Querträger 1 aus verläuft jeweils eine flächige Verstärkungsrippe 21 in Richtung der Hülsen G und H hin zu einem Gussknoten 22, der als Vierkanthülse quer zur Fahrtrichtung ausgebildet ist:

Von dem hülsenartigen Knoten 22 aus verläuft eine jeweils flächige Verstärkungsrippe 23 zum unteren Bereich der Aufnahmehülse K für den Querträger.

Vom Knoten 22 verläuft jeweils eine weitere flächige Verstärkungsrippe 24 zu den Befestigungsstellen C1 und C2. Eine weitere Verstärkungsrippe 25 verläuft von den den unteren Eckbereichen der Aufnahmehülse K für den Querträger benachbarten Befestigungsstellen C2 und D1 den den unteren Bereichen der Hülse I entfernten Befestigungsstellen C1 und C2.

Eine weitere Verstärkungsrippe 26 verläuft jeweils vom unteren Bereich der Hülsen G und H zur Karosserieanbindung, an dem Knoten 22 vorbei, zu den den unteren Eckbereichen der Hülse I für den Querträger entfernten Befestigungsstellen C2 und C1 für den unteren Querlenker.

Eine weitere Verstärkungsrippe 27 verläuft jeweils vom oberen Eckbereich der Aufnahmehülse K zu der dem Aufsatz J beabstandeten Befestigungsstelle A1B2 für den oberen Querlenker.

Der in Fahrtrichtung jeweils vorne liegende Knoten 22 dient jeweils als die hintere Befestigungsstelle E2 für die Befestigung der Spurstange. Der andere Knoten 22, also der in Fahrtrichtung gesehen hintere Knoten, wird nicht belegt; er entsteht, weil die Konsolen 2 und 3 spiegelbildliche Teile sind, um in ein und demselben Werkzeug hergestellt werden zu können.

Die andere Befestigungsstelle, also die in Fahrtrichtung vorne liegende Befestigungsstelle E1 für die Spurstange ist auf der der Aufnahmehülse K für den Querträger abgewandten Seite der Verstärkungsrippe 26 als Ausleger 27 angeformt. Die Hülse 22 bzw. der Gussknoten 22 ist ebenfalls auf der der Spurstange zu gewandten Seite durch einen Boden abgedeckt, der von einer Durchgangsbohrung durchbrochen ist.

Zwischen den Befestigungsstellen A1 und A2 sowie B1 und B2 sind weitere Verstärkungsrippen 28 vorgesehen.

Verstärkungsrippen 29 zumindest annähernd im Bereich der Durchgangsöffnungen der Auflagen C1 und C2 sowie D1 und D2 verbinden diese Auflagen bzw. Befestigungsstellen. Verstärkungsrippen 30 am unteren Außenbereich der Konsolen verbinden die Befestigungsstellen C1,C2; D1,D2 miteinander. Jeweils eine Verstärkungsrippe 31 verbindet den Knoten 22 mit dem unteren Bereich der Hülsen G und H.

### Bezugszeichenliste

### (ist Teil der Beschreibung)

- I: Achsträger
- FR: Fahrtrichtung
- 1: Querträger
- 2: Konsole rechts
- 3: Konsole links
- 4: Querlenker unten
- 5: Spurstange
- 6: Querlenker oben
- 7: Feder-Dämpfer-Einheit
- A: vordere Anbindungsstelle oberer Querlenker
- B: hintere Anbindungsstelle oberer Querlenker
- C: vordere Anbindungsstelle unterer Querlenker
- D: hintere Anbindungsstelle unterer Querlenker
- E: Anbindungsstelle für Spurstange
- F: Anbindungsstelle Feder/ Dämpfereinheit
- G: Anbindungsstelle Karosserie vorne
- H: Anbindungsstelle Karosserie hinten
- K: Aufnahmehülse
- 8: Schweißnaht
- 9,10: Hülsen
- J: Aufsatz
- 11-14: Verstärkungsrippen
- 15: Verstärkungsflächen
- 16-19: Pratzengelenke
- A1,A2;B1,B2;C1,C2; D1,D2;E1,E2;F1,F2: Befestigungsstellen
- 20: Verstärkungsrippe
- 21: Verstärkungsrippe
- 22: Gussknoten
- 23: Verstärkungsrippe
- 24: Verstärkungsrippe
- 25: Verstärkungsrippe
- 26: Verstärkungsrippe
- 27: Ausleger
- 28: Verstärkungsrippen
- 29: Verstärkungsrippen
- 30: Verstärkungsrippen
- 31: Verstärkungsrippen

## Patentansprüche

1. Achsträger für eine KFZ-Hinterachse als zusammengesetzte Baueinheit mit einem einzigen profilierten Querträger (1) und an seinen Endbereichen befestigten und aus Leichtmetal hergestellten Konsolen (2, 3), die jeweils einstückig mit einer Hülse für den Querträger ausgebildet sind und mit je einstückig angeformten Anbindungsstellen (A, B, C, D, E, F, G, H) für die nachfolgend angeführten Aggregate versehen sind:
- die oberen Querlenker (6)
- die unteren Querlenker (4)
- die Spurstange (5)
- die Feder- bzw. Dämpfungseinheit (7),
und die mindestens je zwei einstückig angeformte Anbindungsstellen (G, H) zur Anbindung des Achsträgers (I) an der Karosserie aufweisen.

2. Achsträger nach Anspruch 1, **dadurch gekennzeichnet, dass** - in Fahrtrichtung (FR) gesehen - eine (G) der Anbindungsstellen zur Anbindung des Achsträgers an die Karosserie vor und eine (H) hinter dem Querträger (1) vorgesehen ist.

3. Achsträger nach Anspruch 1 oder 2, **dadurch gekennzeichnet, dass** die Konsole (2, 3) eine Aufnahmehülse (K) für den Querträger (1) besitzt.

4. Achsträger nach einem der Ansprüche 1 bis 3, **dadurch gekennzeichnet, dass** der Querträger (1) ein Hohlprofil ist.

5. Achsträger nach Anspruch 4, **dadurch gekennzeichnet, dass** der Querträger (1) ein Vierkantprofil ist.

6. Achsträger nach einem der vorhergehenden Ansprüche, **dadurch gekennzeichnet, dass** die Aufnahmehülse (K) für den Querträger (1) ein der Außenkontur desselben angepasster Ansatz ist.

7. Achsträger nach einem der vorhergehenden Ansprüche, **dadurch gekennzeichnet, dass** die Konsolen mit dem Querträger verschweißt sind.

8. Achsträger nach einem der vorhergehenden Ansprüche, **dadurch gekennzeichnet, dass** der Querträger aus Leichtmetall, insbesondere einer Al- Legierung, besteht.

9. Achsträger nach einem der vorhergehenden Ansprüche, **dadurch gekennzeichnet, dass** die Konsolen (3, 4) aus einer Al- Legierung bestehen.

10. Achsträger nach Anspruch 9, **dadurch gekennzeichnet, dass** die Konsolen Druckgussteile sind.

11. Achsträger nach einem der Ansprüche 1 bis 10, **dadurch gekennzeichnet, dass** die Anbindungsstellen (G,H) zur Anbindung des Achsträgers (I) an die Karosserie hülsenartig (9, 10) ausgebildet sind mit einer zumindest annähernd senkrecht zur Fahrbahn liegenden Achse.

12. Achsträger nach Anspruch 11, **dadurch gekennzeichnet, dass** die hülsenartigen Befestigungsstellen (9, 10) zur Anbindung des Achsträgers an die Karosserie zur Aufnahme von Gummilagern dienen.

13. Achsträger nach einem der vorhergehenden Ansprüche, **dadurch gekennzeichnet, dass** im Bereich der Aufnahmehülse (K) ein kastenförmiger auf der der Fahrbahnseite derselben abgewandten Seite vorgesehener, mit Verstärkungsrippen (11-14) versehener Aufsatz (J) angeformt ist.

14. Achsträger nach einem der vorhergehenden Ansprüche, **dadurch gekennzeichnet, dass** zumindest für die nachfolgend angeführten Aggregate an der Konsole mindestens zwei Anbindungsstellen vorgesehen sind - eine erste und eine zweite, von denen eine, in Fahrtrichtung (FR) gesehen, vorne liegt und die andere dahinter:
- für den oberen Querlenker (6)
- für den unteren Querlenker (4).

15. Achsträger nach einem der vorhergehenden Ansprüche, **dadurch gekennzeichnet, dass** zumindest für die nachfolgend angeführten Anbindungsstellen zumindest zwei Befestigungsstellen vorgesehen sind - eine erste und eine zweite, von denen, in Fahrtrichtung (FR) gesehen, je eine vorne liegt und die andere dahinter, nämlich:
- für die eine, vordere Anbindungsstelle und die andere, hintere Anbindungsstelle für den oberen Querlenker,
- für die eine, vordere Anbindungsstelle und die andere, hintere Anbindungsstelle für den unteren Querlenker,
- für die Anbindungsstelle für die Spurstange,
- für die Anbindungsstelle für die Feder- bzw. Dämpfereinheit.

## Claims

1. An axle support for a motor vehicle rear axle as an assembled structural unit with a single shaped cross member (1) and brackets (2,3) attached to its end regions and made of light metal, which are each configured integrally with a socket for the cross member and are equipped with in each case integrally moulded connection points (A, B, C,D, E, F, G, H) for the units listed hereafter:
- the upper transverse links (6)
- the lower transverse links (4)
- the track rod (5)
- the spring unit or absorbing unit (7),
and which have at least two integrally moulded connection points (G, H) each for connecting the axle support (I) to the vehicle body.

2. The axle support according to Claim 1, **characterised in that** - seen in the direction of travel (FR) - one (G) of the connection points for connecting the axle support to the vehicle body is provided in front and one (H) is provided behind cross member (1).

3. The axle support according to Claim 1 or 2, **characterised in that** the bracket (2, 3) has a receiving socket (K) for the cross member (1).

4. The axle support according to one of claims 1 to 3, **characterised in that** the cross member (1) is a hollow profile.

5. The axle support according to Claim 4, **characterised in that** the cross member (1) is a square profile.

6. The axle support according to one of the preceding claims, **characterised in that** the receiving socket (K) for the cross member (1) is a projection adapted to the outer contour of said cross member (1).

7. The axle support according to one of the preceding claims, **characterised in that** the brackets are welded to the cross member.

8. The axle support according to one of the preceding claims, **characterised in that** the cross member consists of light metal, in particular an aluminium alloy.

9. The axle support according to one of the preceding claims, **characterised in that** the brackets (3, 4) consist of an aluminium alloy.

10. The axle support according to Claim 9, **characterised in that** the brackets are die cast parts.

11. The axle support according to one of claims 1 to 10, **characterised in that** the connection points (G, H) for connecting the axle support (I) to the vehicle body are configured like sockets (9, 10) with an axis which is at least approximately perpendicular to the road surface.

12. The axle support according to Claim 11, **characterised in that** socket-like attachment points (9, 10) for connecting the axle support to the vehicle body serve to receive rubber mountings.

13. The axle support according to one of the preceding claims, **characterised in that** in the region of the receiving socket (K) is moulded on a box-shaped top piece (J) provided on the side facing away from the road surface side thereof and equipped with reinforcement ribs (11-14).

14. The axle support according to one of the preceding claims, **characterised in that**, at least for the units listed hereafter, at least two connection points are provided at the bracket - a first and a second, of which one, seen in the direction of travel (FR), is at the front and the other one is behind:
- for the upper transverse link (6)
- for the lower transverse link (4).

15. The axle support according to one of the preceding claims, **characterised in that**, at least for the connection points listed hereafter, at least two attachment points are provided - a first and a second, of which one, seen in the direction of travel (FR), is at the front and the other one is behind:
- for the one front connection point and the other rear connection point for the upper transverse link,
- for the one front connection point and the other rear connection point for the lower transverse link,
- for the connection point for the track rod,
- for the connection point for the spring or absorbing unit.

## Revendications

1. Support d'essieu pour un essieu arrière de véhicule automobile sous forme d'unité de construction assemblée avec une seule traverse profilée (1) et des consoles (2, 3) fabriquées en métal léger et fixées au niveau des extrémités de celle-ci, consoles qui sont respectivement réalisées de manière à former une seule pièce avec un manchon pour la traverse et avec des points d'attache (A, B, C, D, E, F, G, H), réalisés par moulage de manière à former une seule pièce avec les consoles, pour les groupes d'éléments spécifiés ci-après:
- les bras oscillants supérieurs (6)
- les bras oscillants inférieurs (4)
- la barre d'accouplement (5)
- l'unité à ressort ou d'amortissement (7),
et qui présentent au moins respectivement deux points d'attache (G, H) réalisés par moulage de manière à former une seule pièce pour attacher le support d'essieu (I) à la carrosserie.

2. Support d'essieu suivant la revendication 1, **caractérisé en ce que** vu dans le sens de déplacement (FR), un des points d'attache (G) destiné à attacher le support d'essieu à la carrosserie est prévu en amont de la traverse (1) et un autre (H) en aval de la traverse (1).

3. Support d'essieu suivant la revendication 1 ou 2, **caractérisé en ce que** la console (2, 3) possède un manchon de réception (K) pour la traverse (1).

4. Support d'essieu suivant une des revendications 1 à 3, **caractérisé en ce que** la traverse (1) est un profil creux.

5. Support d'essieu suivant la revendication 4, **caractérisé en ce que** la traverse (1) est un profil à quatre pans.

6. Support d'essieu suivant une des revendications précédentes, **caractérisé en ce que** le manchon de réception (K) pour la traverse (1) est un embout adapté au contour extérieur de celle-ci.

7. Support d'essieu suivant une des revendications précédentes, **caractérisé en ce que** les consoles sont soudées à la traverse.

8. Support d'essieu suivant une des revendications précédentes, **caractérisé en ce que** la traverse est en métal léger, en particulier en un alliage d'aluminium.

9. Support d'essieu suivant une des revendications précédentes, **caractérisé en ce que** les consoles (3, 4) sont en un alliage d'aluminium.

10. Support d'essieu suivant la revendication 9, **caractérisé en ce que** les consoles sont des pièces moulées sous pression.

11. Support d'essieu suivant une des revendications 1 à 10, **caractérisé en ce que** les points d'attache (G, H), qui servent à attacher le support d'essieu (I) à la carrosserie, sont conçus en forme de manchon (9, 10) avec un axe au moins approximativement perpendiculaire à la chaussée.

12. Support d'essieu suivant la revendication 11, **caractérisé en ce que** les points de fixation (9, 10) en forme de manchon, qui sont destinés à attacher le support d'essieu à la carrosserie, servent à recevoir des paliers en caoutchouc.

13. Support d'essieu suivant une des revendications précédentes, **caractérisé en ce que** dans la zone du manchon de réception (K) est rapporté par moulage un élément en forme de caisson (J) pourvu de nervures de renforcement (11 - 14) qui est prévu sur le côté opposé au côté chaussée du manchon de réception.

14. Support d'essieu suivant une des revendications précédentes, **caractérisé en ce que** sur la console sont prévus, au moins pour les groupes d'éléments spécifiés ci-après, deux points d'attache au moins, à savoir un premier et un second point, dont un se situe en amont et l'autre en aval, vu dans la direction de déplacement (FR),
- pour le bras oscillant supérieur (6)
- pour le bras oscillant inférieur (4).

15. Support d'essieu suivant une des revendications précédentes, **caractérisé en ce qu'**au moins pour les points d'attache spécifiés ci-après, deux points de fixation au moins sont prévus, un premier et un second, dont respectivement un se situe en amont et l'autre en aval, vu dans le sens de déplacement (FR), notamment :
- l'un pour le point d'attache amont et l'autre pour le point d'attache aval pour le bras oscillant supérieur,
- l'un pour le point d'attache amont et l'autre pour le point d'attache aval pour le bras oscillant inférieur,
- pour le point d'attache de la barre d'accouplement,
- pour le point d'attache de l'unité à ressort ou d'amortissement.
